Europäisches Patentamt

European Patent Office

Office européen des brevets

(11) Publication number: **0 222 714 B1**

## (12) EUROPEAN PATENT SPECIFICATION

(45) Date of publication of patent specification: **04.03.92**   (51) Int. Cl.⁵: **C08G  63/78**

(21) Application number: **86830340.5**

(22) Date of filing: **11.11.86**

The file contains technical information submitted
after the application was filed and not included in
this specification

(54) **Process for the production of high molecular weight polyester.**

(30) Priority: **15.11.85 IT 2285185**

(43) Date of publication of application:
**20.05.87 Bulletin  87/21**

(45) Publication of the grant of the patent:
**04.03.92 Bulletin  92/10**

(84) Designated Contracting States:
**AT BE CH DE FR GB LI LU NL**

(56) References cited:
**DE-B- 2 559 290
US-A- 4 161 578**

**PATENT ABSTRACTS OF JAPAN, vol. 2 (110),
page 2058 C 78, 13th September 1978; & JP -
A - 53 73288 (TEIJIN) 29-06-1978**

(73) Proprietor: **COBARR S.p.A.
Via Anticolana Km 1
I-03012 Anagni Frosinone(IT)**

(72) Inventor: **Al Ghatta, Hussain Ali-Kashif
Via Diaz
I-03014 Fiuggi (Frosinone)(IT)**

(74) Representative: **Rambelli, Paolo et al
Jacobacci-Casetta & Perani S.p.A. Via Alfieri
17
I-10121 Torino(IT)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

## Description

The present invention relates to a process for the continuous production of high molecular weight polyester resin from a polyester resin granulate having a lower molecular weight, in which the polyester granulate is subjected in series to a crystallization stage with stirring and with gas flow and thereafter to a solid state polycondensation stage with an inert gas flow.

This process is particularly suitable for the production of polyester resins, such as polyethylene terephthalate (PET) and polyethylene isophthalate, suitable for the production of bottles for carbonated beverages.

The main problem of the known processes consists in the removal from the PET granulate of acetaldehyde and in the generation rate of acetaldehyde in the granulate, which, in the following step of tranformation of such granulate into the bottles can give some problems. Particularly in the production of bottles by stretch-blowing of preforms, it has been noted that high contents of acetaldehyde and particularly a high acetaldehyde generation rate in the granulate can lead to an increase of acetaldehyde contents in the preforms and in the walls of the bottles made from such preforms.

Moreover, in the crystallization stage the generation rate of acetaldehyde is particularly high.

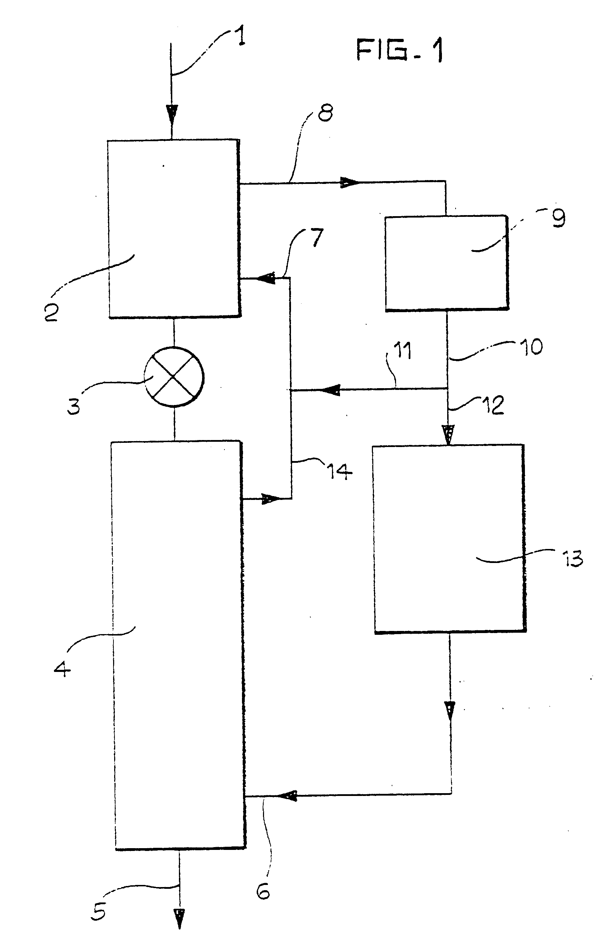

Processes for the production of PET suitable for the production of bottles and containers, based on the solid state polycondensation, are described by U.S. patents No. 4,064,112 and No. 4.161,578. These processes differ from each other essentially in the different temperatures utilized in the crystallization and polycondensation stages. It has been noted that the acetaldehyde generation rate in the PET granulate subjected to the above mentioned known processes is still high, particularly in the crystallization stage, and this leads to poor properties of the bottles made from such granulate. It is important to emphasize that the above patents do not consider the problem of the generation rate of acetaldehyde during the overall process. Experiments made by the applicant have proved that with the process according to the above patents the generation rate of acetaldehyde is always higher than 0.3 ppm/min at 250°C. DE-B- 25 59 290 (& GB-A- 1 557 337) discloses a process for the continuous production of high molecular weight polyester, which contains the features of the invention, except the step (C) corresponding to stream 11 in FIG. 1

The object of the present invention is to provide a process for the production of a polyester resin, particularly PET, having a high molecular weight, a content of residual acetaldehyde below 1 ppm and a very low generation rate of acetaldehyde during the overall process.

This object is achieved by virtue of the fact that the process comprises the steps of recycling continuously the gas flow in counter-current to the polycondensation and crystallition stage; subjecting to an oxidation stage the inert gas flow leaving the crystallization stage, such inert gas including organic compounds produced in the crystallization and polycondensation stages; supplying directly without purification the crystallization stage with a portion of the gas flow leaving the oxidation stage; supplying a purification stage with the remaining portion of gas flow leaving the oxidation stage and supplying the policondensation stage with such remaining portion after purification.

By virtue of these characteristics, the generation rate of acetaldehyde of the resin is very low. Moreover, the flow rate of inert gas sent to the purification stage is reduced, with a saving on the apparatus.

Preferably, the portion of gas flow leaving the oxidation stage and supplying directly the crystallization stage, is comprised between 5 and 50% by weight of the total gas flow, more preferably between 5 and 20%.

Further advantages and features of the process according to the present invention will become clear from the detailed description which follows, purely by way of non-limiting example, with reference to practical examples regarding the process and to the appended drawings, in which:

Fig. 1 shows in a schematic way the lay-out of the process, and

Fig. 2 shows the analytical apparatus to determine the acetaldehyde generation rate.

With reference to the appended drawing, with 1 is indicated the granulate flow of polyester resin entering a crystallization stage 2 in which the granulate is subjected to stirring in order to avoid sticking. The apparatus of stage 2 can comprise, as an alternative, a stirred reactor, a screw reactor, a multi-tubular device or a fluidized bed reactor. The temperature in stage 2 is comprised between 170 and 220°C, preferably between 190 and 220°C. The granulate flow leaving the crystallization stage 2 is fed, through a conveyor 3, to a fixed bed polycondensation stage 4 in which the temperature is maintained between 180°C and 245°C, preferably between 190 and 230°C. More preferably, the temperature in the polycondensation stage is maintained between 200 and 220°C and it is equal to the temperature of the crystallization stage. From the stage 4 a granulate flow 5 of polyester with a low content of acetaldehyde and having a low acetaldehyde generation rate is continuously extracted.

Nitrogen flows 6 and 7 are fed to the stages 4 and 2 in order to remove the volatile products which are formed in the polycondensation and crystallization stages, essentially ethylene glycol and acetaldehyde. The nitrogen flow leaving the stage 2, indicated with reference 8, is fed to an oxidation stage 9 having a catalytic fixed bed in order to oxidize the volatile organic compounds which are present in the nitrogen flow. The stage 9 can be constituted by a reactor of know type which utilizes air to oxidize the organic compounds in a temperature range between 250 and 400°C and which then removes the surplus of oxygen by catalytic hydrogenation to reach oxygen concentrations below 1 ppm. The volatile compounds which are present in the nitrogen flow 10 leaving the oxidation stage 9 have an ethylene glycol content below 1 ppm and an acetaldehyde content below 1 ppm. Moreover the nitrogen flow 10 has a content of $CO_2$ and water less than 5% by weight and less than 1% hydrogen by volume.

The nitrogen flow 10 is divided in two streams 11 and 12. The stream 12 is fed to a dryer 13 of commercial type i.e. utilizing silica gel or molecular sieves. The nitrogen flow 7 entering the crystallization stage 2 is the sum of stream 11 leaving the stage 9 and of stream 14 leaving the polycondensation stage 4.

The flow 7 entering the stage 2 has an acetaldehyde content and an ethylene glycol content both below 5 ppm, preferably 2 ppm, and a $CO_2$ content higher than 0,1% by weight referred to the total gas flow. The concentration of oxygen in the flow 10 which leaves the oxidation stage is below 2 ppm, preferably 1 ppm.

In any stage of the process there is no addition of water or steam.

Crashed bottles of polyester can be advantageously utilized as starting material for the process. The final product obtained through the present process is particularly suitable for the production of carbonated beverages bottles.

In order to more clearly describe the process according to the present invention the following examples are given.

Example 1

The crystallization stage (stage 2 of the drawing) is supplied with 100 kg/h of PET pellets having an intrinsic viscosity 0.6 and an acetaldehyde content 140 ppm. In counter-current with the PET pellets are fed 80 kg/h of nitrogen coming from the combination of flows 11 and 14. The temperature of the stage 2 is maintained at 215°C and the residence time of the pellets is of 1.5 hours.

The pellets are then transferred to the polycondensation stage 4 to which is fed, in counter-current, the nitrogen flow 6 with a flow rate of 70 kg/h. The temperature during the polycondensation is maintained at 230°C and the residence time of the pellets in the stage 4 is 5.5 hours.

The produced PET has an intrinsic viscosity of 0.81, an acetaldehyde content of 0.3 ppm and the generation rate of acetaldehyde at 250°C is 0.13 ppm/min.

Example 2

The crystallization stage 2 is supplied with 100 kg/h of pellets of polyethylene terephthalate-isophthalate copolymer (CoPET), having a content of isophthalic groups of 5% by weight of polymer and an intrinsic viscosity of 0.58 and an acetaldehyde content of 110 ppm.

The treatment conditions as far as the inert gas flow and the residence time are concerned, are identical to those of example 1, with the only difference that the temperature in the stages 2 and 4 is maintained at 218°C.

The produced copolymer has an intrinsic viscosity of 0.8 and an acetaldehyde content of 0.2 ppm. The generation rate of acetaldehyde at 250°C is 0.12 ppm/min

Example 3

The crystallization stage 2 is supplied with 100 kg/h of not dried pellets of PET having an intrinsic viscosity of 0.6, an acetaldehyde content of 140 ppm. The recycled nitrogen flows are maintained equal to those of example 1 and 2.

The temperature during the crystallization is maintained at 170°C, with a residence time of 1.5 hours.

The temperature in the polycondensation stage is maintained at 215°C, with a residence time of 7.5 hours.

The produced PET has an intrinsic viscosity of 0.8 and an acetaldehyde content of 0.4 ppm. The generation rate of acetaldehyde at 250°C is 0.15 ppm/min.

Example 4

The crystallization stage 2 is supplied with 100 kg/h of crashed PET bottles having an intrinsic viscosity of 0.79 and an acetaldehyde content of 32 ppm. In counter-current with the crashed bottles, 80 kg/h of nitrogen coming from the combination of flows 11 and 14 are fed. The temperature of stage 2 is maintained at 230°C and the residence time is 1.5 hours.

The crashed bottles are then transferred to a polycondensation stage 4 to which the nitrogen flow 6 with a rate of 70 kg/h is fed in counter-current. The temperature during the polycondensation is maintained at 230°C, with a residence time of 3 hours.

The regradated crashed PET bottles, suitable for the production of new bioriented bottles, have an intrinsic viscosity of 0.8 and an acetaldehyde content of 0.1 ppm. The generation rate of acetaldehyde at 250°C is 0.13 ppm/min.

Hereinafter the methods followed to determine the analytical data of the above examples are given.

The intrinsic viscosities have been determined on a solution of 0.5 g of polyester pellets in 100 ml of phenol/tetrachloroethane solution with a ratio 1:1 at a temperature of 20°C.

The free acetaldehyde content has been determined with gas cromatographic methods previously described by DE-OS 28 34 162.

The thermal desorption technique has been used in our laboratory to determine the acetaldehyde generation rate.

We used the CARLO-ERBA-TDAS-5000 (thermal-desorption autosampler) in connection with CARLO-ERBA-GC. model HRGC 5300-Mega series and Mega series integrator model SP-4270.

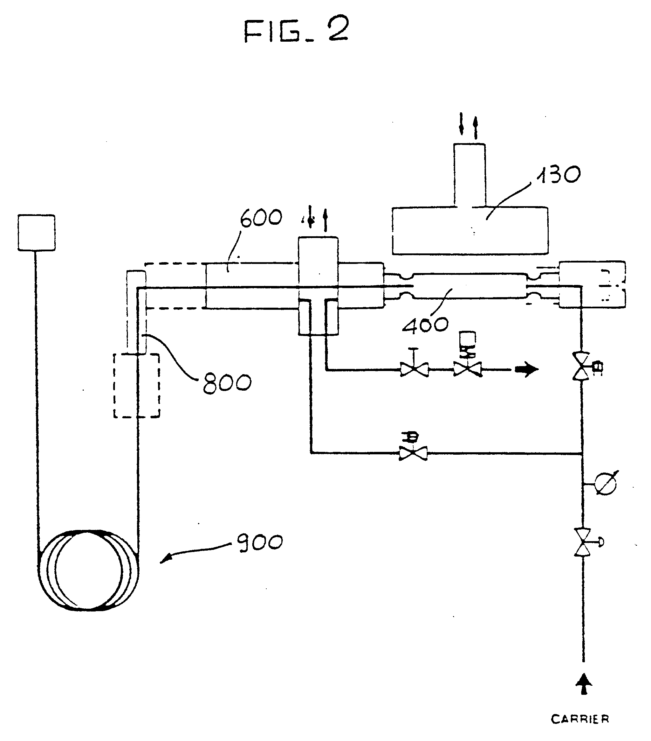

With reference to Fig. 2, the tube 400 holding the PET-sample is inserted into the sampling position by the automatic loading mechanism and is heated to the desired temperature by the heater 130.

Carrier gas flowing through tube 400 transports the generated components through the switching value and low volume heated interface 600 into the split injector of the analytical GC 800. The components are cold trapped on a capillary column 900 at minus 62°C. We used Cryo unit to maintain the required temperature for the cold trapping. The capillary column was then heated by a selected temperature program till 230°C. The components were then detected by a FID-detector. The used instrumentations and conditions are the following:
- Instrumentations are all Carlo Erba
  - TDAS 5000, Thermal Desorption Autosamples and control unit
  - HRGC 5300 GC with flame ionization detector
  - Model SP-4270, Mega Series integrator
  - MFC 500 multifunction controller
  - Cryo 520-Control Module
  - Sub ambient temperature kit for Cryo-520
  - Messer Griesheim type Jupiter, 50 l Capacity, kit for operations with liquid nitrogen.

Column:
  - Column type
  : capillary
  - Column material
  : duran glass
  - Stationary phase
  : PS 255
  - Dimensions
  : 50 m x (0.5-0.55 mm I.D.)
  - Upper temperature limit
  = +300°C

GC. Conditions:
  - Column temperature program
    62 ---> 40°C
    ∞°C/min
    40°
    2 min
    40° ---> 230°C
    20°C/min
    Split flow
    : 20ml/min
    Carrier gas
    : He
    Gas pressure
    : 1.1 Kg/cm$^2$
    Detector
    : FID , H$_2$ flow : 0.7 kg/h
    Air flow : 1 kg/h

## Claims

1. Process for the continuous production of high molecular weight polyester resin from a polyester resin granulate having a lower molecular weight, in which such granulate is subjected in series to a crystallization stage with stirring and with inert gas flow and thereafter to a solid state polycondensation stage with inert gas flow, characterized in that it comprises the steps of:

   a) recycling the inert gas flow continuously and in counter-current to the polycondensation and crystallization stages,
   b) subjecting to an oxidation stage the inert gas flow leaving the crystallization stage, including volatile organic compounds produced in the crystallization and polycondensation stages,
   c) supplying directly the crystallization stage with a portion of the gas flow leaving the oxidation stage, and
   d) purifying the remaining portion of gas flow and supplying the polycondensation stage with such purified flow portion.

2. Process according to Claim 1, characterized in that the portion (11) of inert gas flow leaving the oxidation stage and fed directly to the crystallization stage is comprised between 5 and 50% by weight of total inert gas flow (7).

3. Process according to Claim 1, characterized in that the total inert glas flow (7) fed to the crystallization stage has a temperature comprised between 170°C and 220°C.

4. Process according to Claim 1, characterized in that the portion of inert gas flow (6) fed to the polycondensation stage has a temperature comprised between 180°C and 245°C.

5. Process according to Claim 1, characterized in that the ratio between the flow rate by weight of granulate fed to crystallization stage and the flow rate by weight of inert gas flow (7) fed to the same stage is comprised between 0.5 and 2.

6. Process according to any of the preceding claims, characterized in that the polyester resin is polyethylene terephthalate.

7. Process according to any of the preceding claims 1-5, characterized in that such polyester resin is a copolymer of polyethylene terephthalate.

8. Process according to any of the preceding claims, characterized in that the temperature of crystallization stage is equal to the temperature of polycondensation stage and it is comprised between 200 and 220°C.

9. Process according to any of the preceding claims 1-6, characterized in that the polyester resin comprises crashed bottles of polyester.

10. Process according to any of the preceding claims, characterized in that such inert gas is nitrogen.

11. Process according to any of the preceeding claims, characterized in that the total inert gas flow (7) fed to the crystallization stage has a $CO_2$ content higher than 0.1% by weight referred to the total gas flow.

12. Process according to any of the preceding claims, characterized in that no external water or steam is added to the recycled gas flow.

**Revendications**

1. Procédé de préparation continu de résine de polyester à haut poids moléculaire à partir d'un granulat de résine de polyester ayant un bas poids moléculaire, dans lequel ledit granulat de polyester est soumis en série à une phase de cristallisation avec agitation et avec flux de gaz inerte, et ensuite à une phase de polycondensation à l'état solide au moyen d'un flux de gaz inerte, caractérisé en ce qu'il comprend les phases consistant à :
   a) recycler le flux de gaz inerte en continu et à contrecourant des phases de polycondensation et de cristallisation,
   b) soumettre à une phase d'oxydation le flux de gaz inerte quittant la phase de cristallisation, y compris les composés organiques volatiles produits au cours des phases de cristallisation et de polycondensation,
   c) apporter directement à la phase de cristallisation une partie du flux de gaz quittant la phase d'oxydation, et à
   d) purifier la partie restante de flux gazeux et à amener à la phase de polycondensation cette partie de flux purifié.

2. Procédé selon la revendication 1, caractérisé en ce que la partie (11) de flux de gaz inerte quittant la phase d'oxydation est amenée directement vers la phase de cristallisation et est comprise entre 5 et 50 % en poids du flux de gaz inerte total (7).

3. Procédé selon la revendication 1, caractérisé en ce que le flux de gaz inerte total (7), amené à la phase de cristallisation, a une température comprise entre 170°C et 220°C.

4. Procédé selon la revendication 1, caractérisé en ce que la partie de flux de gaz inerte (6) amené à la phase de polycondensation, a une température comprise entre 180 °C et 245 °C.

5. Procédé selon la revendication 1, caractérisé en ce que le rapport entre le débit en poids de granulat amené à la phase de cristallisation et le débit en poids de flux de gaz inerte (7), amené à la même étape, est compris entre 0,5 et 2.

6. Procédé selon l'une des revendications précédentes, caractérisé en ce que la résine de polyester est le polyéthylène téréphtalate.

7. Procédé selon l'une des revendications précédentes 1 à 5, caractérisé en ce que cette résine de polyester est un copolymère de polyéthylène téréphtalate.

8. Procédé selon l'une des revendications précédentes, caractérisé en ce que la température à la phase de cristallisation est égale à la température, à la phase de polycondensation, et est comprise entre 200 et 220°C.

9. Procédé selon l'une des revendications précédentes 1 à 6, caractérisé en ce que la résine de polyester comprend des bouteilles brisées de polyester.

10. Procédé selon l'une des revendications précédentes, caractérisé en ce que le gaz inerte est l'azote.

11. Procédé selon l'une des revendications précédentes, caractérisé en ce que le flux de gaz inerte total (7), amené à la phase de cristallisation, a une teneur en $CO_2$ supérieure à 0,1 % en poids, par rapport au flux gazeux total.

12. Procédé selon l'une des revendications précédentes, caractérisé en ce qu'aucune eau ou vapeur extérieure n'est ajoutée au flux de gaz recyclé.

**Patentansprüche**

1. Verfahren zur kontinuierlichen Produktion eines hochmolekularen Polyesterharzes aus einem Polyesterharzgranulat, das ein niedriges Molekulargewicht besitzt, wobei dieses Granulat der Reihe nach unter Rühren und mit einer Strömung eines inerten Gases einer Kristallisationsstufe und dann einer Feststoff-Polykondensationsstufe mit einer Strömung eines inerten Gases unterworfen wird, dadurch gekennzeichnet, daß das Verfahren folgende Schritte enthält:

a) fortlaufendes Wieder-in-Umlauf-bringen der Strömung eines inerten Gases im Gegenstrom zur Polykondensations- und Kristallisationsstufe,

b) Unterziehen der Strömung eines inerten Gases, die die Kristallisationsstufe verläßt, einer Oxydationsstufe, einschließlich flüchtigen organischen Verbindungen, die in der Kristallisations- und Polykondensationsstufe erzeugt werden,

c) direktes Beschicken der Kristallisationsstufe mit einem Anteil der Gasströmung, die die Oxydationsstufe verläßt, und

d) Reinigen des Restanteils der Gasströmung und Beschicken der Polykondensationsstufe mit diesem gereinigten Strömungsanteil.

2. Verfahren gemäß Anspruch 1, dadurch gekennzeichnet, daß der Anteil (11) der Strömung eines inerten Gases, der die Oxydationsstufe verläßt und direkt der Kristallisationsstufe zugeführt wird, zwischen 5 und 50 Gewichtsprozent der gesamten Strömung eines inerten Gases (7) enthält.

3. Verfahren gemäß Anspruch 1, dadurch gekennzeichnet, daß die gesamte inerte Gasströmung (7), die der Kristallisationsstufe zugeführt wird, eine Temperatur zwischen 170° C und 220° C besitzt.

4. Verfahren gemäß Anspruch 1, dadurch gekennzeichnet, daß der Anteil der Strömung eines inerten Gases (6), der der Polykondensationsstufe zugeführt wird, eine Temperatur zwischen 180° C und 245° C besitzt.

5. Verfahren gemäß Anspruch 1, dadurch gekennzeichnet, daß das Gewichtsverhältnis zwischen der Strömungsgeschwindigkeit des Granulats, das der Kristallisationsstufe zugeführt wird, und der Strömungsgeschwindigkeit der Strömung eines inerten Gases (7), die der selben Stufe zugeführt wird, zwischen 0,5 und 2 liegt.

6. Verfahren gemäß jedem der bisherigen Ansprüche, dadurch gekennzeichnet, daß das Polyesterharz ein Polyäthylenterephthalat ist.

7. Verfahren gemäß jedem der Ansprüche 1 bis 5, dadurch gekennzeichnet, daS das Polyesterharz ein Copolymer von Polyäthylenterephthalat ist.

8. Verfahren gemäß jedem der bisherigen Ansprüche, dadurch gekennzeichnet, daß die Temperatur der Kristallisationsstufe gleich der Temperatur der Polykondensationsstufe ist und zwischen 200 und 220° C liegt.

9. Verfahren gemäß jedem der Ansprüche 1 bis 6, dadurch gekennzeichnet, daS das Polyesterharz zerbrochene Flaschen aus Polyester enthält.

10. Verfahren gemäß jedem der bisherigen Ansprüche, dadurch gekennzeichnet, daß das inerte Gas Stickstoff ist.

11. Verfahren gemäß jedem der bisherigen Ansprüche, dadurch gekennzeichnet, daß die gesamte Strömung eines inerte Gases (7), die der Kristallisationsstufe zugeführt wird, einen $CO_2$-Gehalt über 0,1 Gewichtsprozent bezogen auf die gesamte Gasströmung besitzt.

12. Verfahren gemäß jedem der bisherigen Ansprüche, dadurch gekennzeichnet, daß kein externes Wasser oder Dampf der wieder in Umlauf gebrachten Gasströmung beigegeben wird.

FIG. 1

EP 0 222 714 B1

FIG. 2

CARRIER

8